# EUROPÄISCHE PATENTANMELDUNG

(11) **EP 2 372 268 A2**
(43) Veröffentlichungstag der Anmeldung: **05.10.2011**
(21) Anmeldenummer: 11157620.3
(22) Anmeldetag: 10.03.2011
(51) Int. Cl.: F24J 2/52

(54) **Halteeinrichtung für Solarelemente**

(30) Priorität: 16.03.2010 DE 102010015983
(71) Anmelder: Richard Brink GmbH & Co. KG, 33758 Schloss Holte-Stukenbrock (DE)
(72) Erfinder: Brink, Stefan, 33758 Schloß Holte-Stukenbrock (DE)
(74) Vertreter: Dantz, Jan Henning

(57) **Zusammenfassung**

Die Erfindung betrifft eine auf einer im Wesentlichen horizontalen Fläche aufstellbare Halteeinrichtung für schräg gestellte Solarelemente (2), mit mindestens zwei vorgefertigten, in Funktionsstellung miteinander verbundenen, abständig zueinander angeordneten dreieckigen Stützelementen (1), die ein direktes oder indirektes Auflager für die schräg gestellten Solarelemente (2) bilden, ist so ausgebildet, dass einen Rahmen bildende Rahmenteile (1.1,1.2,1.3) jedes Stützelementes (1) aus miteinander verbundenen Rohren oder Blechfonnteilen bestehen und die dem abgefallenen Endbereich der Auflageseite für die Solarelemente (2) gegenüberliegende Rückseite der Halteeinrichtung durch eine Platte (7) verschlossen ist und/oder die Stützelemente (1) auf Rinnen (8) aufliegen, in denen Beschwerungsmittel (9) in Form von Betonplatten oder dergleichen ablegbar sind.

## Beschreibung

Die Erfindung betrifft einen Bausatz einer Halteeinrichtung für Solarelemente nach dem Oberbegriff des Anspruchs 1.

Solarelemente in Form von Solarmodulen oder Solarkollektoren werden in dem hier interessierenden Fall auf Flachdächern installiert, wobei sie diesen gegenüber schräg gestellt positioniert sind, um so eine größtmögliche Sonneneinstrahlung zu erreichen. Dabei sind die Flachdächer im Wesentlichen horizontal ausgerichtet, was eine gewisse Neigung einschließt, mit der ein ausreichender Regenablauf gewährleistet werden soll.

Die bislang eingesetzten Halteeinrichtungen bestehen beispielsweise aus an Ort und Stelle zugeschnittenen, d.h. abgelängten Profilstäben, die üblicherweise durch Verschrauben miteinander verbunden sind, wobei die notwendigen Durchgangsbohrungen für die Schrauben ebenfalls bei der Montage eingebracht werden.

Naturgemäß ist dies nur mit einem erheblichen Fertigungs- und Montageaufwand zu bewerkstelligen, was einer stets angestrebten Kostenoptimierung entgegensteht. Hierzu zählt auch die Befestigung der Solarelemente an der Halteeinrichtung, für die bisher spezielle Halterungen angefertigt und mit dem Gestell verbunden werden.

Insbesondere sind separate Sicherungsteile als Rutschsicherung erforderlich, durch die die Solarelemente in Schrägrichtung gehalten werden.

Hierfür kommen dann, wenn die Halteeinrichtung aus Profilrohren mit äußeren Längsnuten hergestellt sind, Nutsteine zum Einsatz, die in den Längsnuten geführt sind und mit denen entsprechende Rutschsicherungen oder Klemmelemente verbunden sind.

Die Montage dieser Nutsteine ist ebenfalls relativ zeitaufwendig, so wie ein genaues, winkliges Ausrichten der Einzelteile der Halteeinrichtung zueinander.

Ein gattungsgemäßer Bausatz ist aus der DE 20 2009 003 124 U1 bekannt. Darin wird vorgeschlagen, die Stützelemente einstückig aus Beton durch Gießen herzustellen, um so ein hohes Gewicht für eine ausreichende Standfestigkeit zu erhalten. Auch bei dieser Konstruktion sind spezielle Halterungen erforderlich, um die Solarelemente bzw. als Auflager dafür fungierende Tragprofile zu halten.

Alles in allem sind die bekannten Halteeinrichtungen nicht geeignet, eine rationelle Montage sowie eine ebensolche Fertigung zu ermöglichen.

Der Erfindung liegt die Aufgabe zugrunde, einen Bausatz der gattungsgemäßen Art so weiterzuentwickeln, dass eine optimierte Herstellung und Montage der Halteeinrichtung möglich ist, bei gleichzeitig geringem Materialeinsatz.

Diese Aufgabe wird durch einen Bausatz gelöst, der die Merkmale des Anspruchs 1 aufweist.

Der neue Bausatz bietet gegenüber den bekannten Bausätzen erhebliche Vorteile, insbesondere hinsichtlich einer vereinfachten, überdies in wesentlich kürzerer Zeit möglichen Montage zur Bildung einer Halteeinrichtung.

Die Quasi-Konfektionierung der Halteeinrichtung, vornehmlich deren Stützelemente, führt dazu, dass bauseitig praktisch keine Fertigungsarbeiten erforderlich sind.

Dabei sind die Stützelemente aus miteinander verbundenen, ein offenes Dreieck begrenzenden Rahmenteilen, hergestellt. Mindestens zwei parallel zueinander verlaufende Stützelemente bilden eine Halteeinrichtung, die auf einer im Wesentlichen horizontalen Fläche, üblicherweise einem Flachdach, aufgestellt werden.

Die Rahmenteile können aus Rohren bestehen, aber auch aus abgekanteten Blechstreifen, wobei letzteres eine besonders preiswerte Herstellung ermöglicht.

Denkbar ist auch, die Stützelemente aus einer Blechtafel auszubilden, die randseitig abgekantet ist, bzw. auch im Flächenbereich Sicken aufweist zur Stabilisierung.

Die Ausbildung als offenes Dreieck ist insofern vorteilhaft, als hier keine Angriffsfläche für eine Windlast besteht.

Demgegenüber ist bevorzugt die andere, die der in abfallender Richtung gebildeten Dreieck-Spitze gegenüberliegende Seite geschlossen, insbesondere durch ein Verkleidungsblech, wodurch verhindert wird, dass unterhalb der Solarelemente bzw. in der Halteeinrichtung ein Staudruck entsteht, mit einer entsprechenden auf die Solarelemente wirkenden Windlast.

Nach einer vorteilhaften Weiterbildung der Erfindung ist vorgesehen, dass zwei, quer zur Längserstreckung der Stützelemente verlaufende Streben vorgesehen sind, die einerseits Abstandshalter für die Stützelemente bilden und auf denen andererseits die Solarelemente direkt oder indirekt aufliegen.

Dabei können diese Streben ebenfalls entweder aus einem marktüblichen Rohr bestehen oder als Blechformteil ausgebildet sein.

In diesem Fall ist eine der Dreieckspitze zugeordnete Strebe derart ausgestaltet, dass sie eine Verschiebesicherung für die Solarelemente bildet in der Form, dass eine Abkantung vorgesehen ist, an der sich die Solarelemente im zugeordneten Randbereich abstützen.

Die Dimensionierung der Stützelemente bzw. der Halteeinrichtung insgesamt erfolgt üblicherweise objektbezogen. Denkbar ist aber auch, die Stützelemente, wie bereits erwähnt, als konfektionierte Teile herzustellen.

Die Halteeinrichtung kann dabei so ausgebildet sein, dass sie auf der Dachfläche in Nord-Süd-Ausrichtung aufstellbar ist, wobei die Auflageseite für die Solarelemente lediglich einseitig in Süd-Richtung abfällt.

Eine andere Variante der Erfindung sieht vor, dass die Stützelemente in ihrer Kontur ein stumpfwinkliges, gleichschenkliges Dreieck beschreiben, deren den stumpfen Winkel einschließende Schenkel jeweils ein Auflager für die Solarelemente bilden. Diese Ausführungsform findet vorwiegend für eine Montage in Ost-West-Ausrichtung der Solarelemente Verwendung.

Bei dieser Konzeption, ebenso wie bei der für eine Nord-Süd-Ausrichtung, bei der lediglich eine Schrägseite mit Solarelementen belegt ist, kann die Verbindung der Stützelemente über die Solarelemente selbst erfolgen, die dann auf den Stützelementen aufliegen, unter Verzicht auf die genannten Streben.

Hierbei entsprechen die Abstände zwischen den parallel zueinander angeordneten Stützelementen dem zugeordneten Abmaß der Solarelemente, d.h., die Anzahl der Stützelemente ist größer als bei der Ausführungsform, bei der als Verbindung die Streben zum Einsatz kommen, die dann ein Auflager für die Solarelemente bilden.

Um einen Eingriff zur Befestigung der Halteeinrichtung am Flachdach zu vermeiden und damit die Gefahr einer Beschädigung auszuschließen, wird die Halteeinrichtung lediglich auf das Flachdach aufgesetzt und vorzugsweise beschwert, beispielsweise mit Betonplatten oder dergleichen, die auf den Randbereichen der Stützelemente aufliegen können.

Ein Gedanke der Erfindung sieht vor, dass die Stützelemente mit ihren beiden sich gegenüberliegenden Endbereichen an kastenförmigen Rinnen abstützen, die einerseits einen Aufnahmeraum für die Betonplatten bilden und andererseits die Stützelemente mit entsprechendem Abstand zur Dachfläche positionieren. Dabei sind die Stützelemente mit den kastenförmigen Rinnen verschraubt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

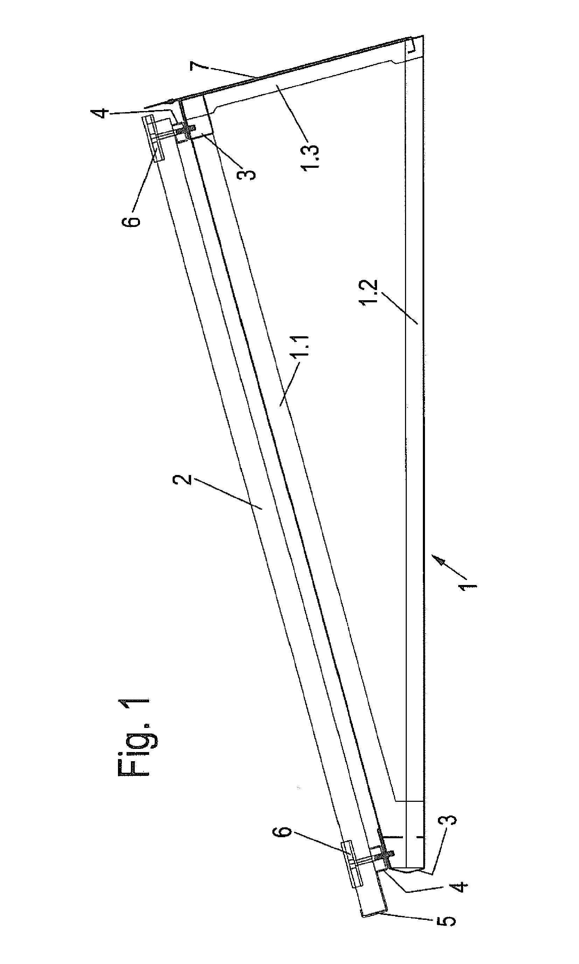

- Figuren 1-4: jeweils ein Ausführungsbeispiel der Erfindung in einer schematischen Seitenansicht.

In den Figuren ist jeweils eine aus einem Bausatz montierte Halteeinrichtung dargestellt, die auf einer nicht gezeigten, im Wesentlichen horizontalen Fläche aufgestellt ist und die erfindungsgemäß jeweils zwei vorgefertigte, in Funktionsstellung miteinander verbundene und abständig zueinander angeordnete dreieckige Stützelemente 1 aufweist. Diese Stützelemente 1 bilden ein Auflager für schräg gestellte Solarelemente 2.

Die in den Figuren 1 und 2 gezeigten Beispiele dienen der Anordnung der Solarelemente 2 in Nord-Süd-Ausrichtung, während die in den Figuren 3 und 4 gezeigten Varianten für eine Ost-West-Ausrichtung der Solarelemente 2 gedacht sind.

Die Stützelemente 1 sind jeweils aus einem offenen Rahmen gebildet, mit den Rahmenteilen 1.1, 1.2 und 1.3, wobei die Rahmenteile 1.1 und 1.2 einen kleinsten spitzen Winkel einschließend, während das Rahmenteil 1.3 gegenüberliegend praktisch eine Rückseite bildet.

An dem praktisch oberen Rahmenteil 1.1 sind bei dem Beispiel nach Figur 1 quer verlaufende Streben 3 befestigt, wobei zur einfacheren Montage die vorgefertigten Stützelemente 1 mit fest stehenden, nach außen gerichteten nicht dargestellten Gewindebolzen versehen sind, auf die die Streben 3, 4 aufgesetzt sind, wozu die Streben 3 Durchgangslöcher aufweisen. Dabei können die Streben 3 durch Aufschrauben von Muttern auf die Gewindebolzen mit den Stützelementen 1 verschraubt werden.

Die Streben 3 dienen der Auflage der Solarelemente 2, die im Übrigen mittels mit den Streben 3 verschraubten Halterungen 6 gesichert sind.

Zur mittelbaren Lagerung der Solarelemente 2 sind Distanzstücke 4 vorgesehen, die am Stützelement 1 und/oder den Streben 3 befestigt sind.

Die Halterungen 6 können durch Verbindungselemente befestigt sein, die, entsprechend einem vorgegebenen Abmaß, vorgefertigt eingebracht sind, wobei als Verbindungselemente Muttern oder Schrauben zum Einsatz kommen, die bei der Vorfertigung unverlierbar angebracht werden.

Die der Dreieckspitze zugeordnete Strebe 3 weist einen Anschlag 5 auf, an dem sich das Solarelement 2 in Schrägrichtung abstützt. Die der Dreieckspitze gegenüberliegende Seite, also die genannte Rückseite, ist durch eine sich über die gesamte Breite der Halteeinrichtung erstreckende Rückenplatte 7 verschlossen. Der Anschlag 5 kann als separates Teil gefertigt sein oder an die Strebe 3 angeformt.

Bevorzugt sind die Distanzstücke 4 und/oder die Anschläge 5 zwischen zwei Solarelementen angeordnet, wobei zumindest eines der beiden Bauteile einen beispielsweise angeformten Abstandshalter aufweist, mit dem eine einfache und genaue Positionierung der anliegenden Solarelemente 2 möglich ist.

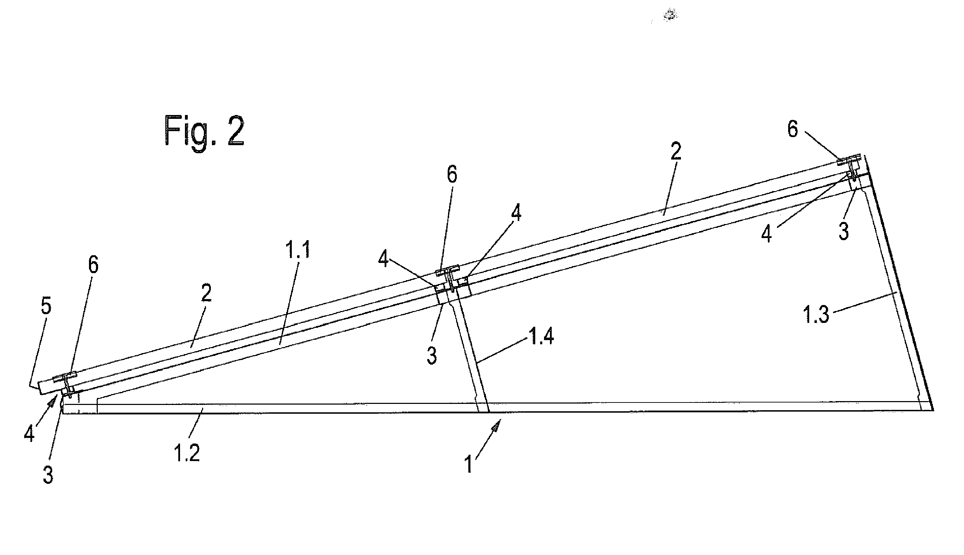

In der Figur 2 sind zwei in Schrägrichtung benachbarte Solarelemente 2 vorgesehen, wobei eine Stützstrebe 1.4 für eine ausreichende Biegesteifigkeit des durchgehenden Rahmenteiles 1.1 sorgt.

Im Übrigen sind die einander zugewandten Ränder der beiden Solarelemente 2, die sich jeweils auf einer Strebe 3 abstützen, durch eine gemeinsame Halterung 6 verspannt.

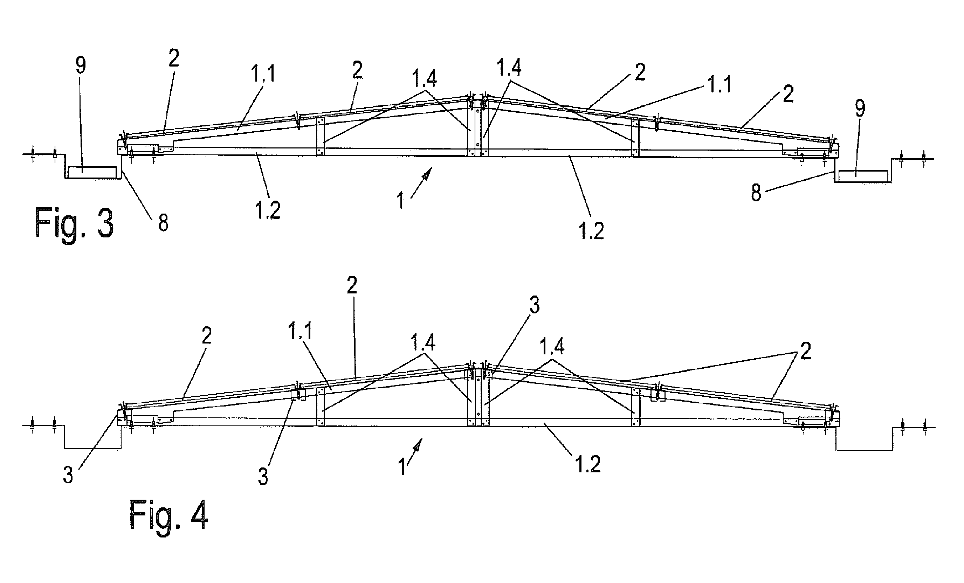

Prinzipiell besteht die Möglichkeit, auf die Streben zu verzichten und die Solarelemente 2 unmittelbar auf die beabstandeten Rahmenteile 1.1 aufzulegen und mittels Halterungen daran zu befestigen, wie dies in der Figur 3 als einem weiteren Ausführungsbeispiel gezeigt ist.

Diese bevorzugte Ost-West-Ausrichtung, bei der die Solarelemente 2 an entgegengesetzt schräg verlaufenden Rahmenteilen 1.1 anliegen, sind gegenüber der Nord-Süd-Ausrichtung flacher aufgestellt, wobei diese Anordnung aufgrund der fehlenden Schattenwirkung eine großflächigere Bestückung des Flachdaches erlaubt als bei der in den Figuren 1 und 2 gezeigten Variante, bei der die Solarelemente 2 steiler verlaufen.

In der Figur 4 sind die Solarelemente 2 auf Streben 3 gelagert, die zwei parallel und abständig zueinander angeordnete Stützelemente 1 miteinander verbinden. Die Befestigung der Solarelemente 2 entspricht im Wesentlichen der, wie sie in der Figur 1 gezeigt ist. Lediglich die Halterungen 6 sind modifiziert.

Im Übrigen liegen die Stützelemente 1 bei den Beispielen nach den Figuren 3 und 4 abständig zur Aufstandsfläche auf kastenförmigen Rinnen 8 auf, die als Blechformteile ausgebildet sind und in denen Beschwerungsteile 9, beispielsweise Betonplatten, einliegen, wodurch die damit verschraubten Stützelemente 1 bzw. die gesamte Halteeinrichtung sicher gehalten werden, auch bei einwirkender Windlast.

## Patentansprüche

1. Bausatz einer auf einer im Wesentlichen horizontalen Fläche aufstellbaren Halteeinrichtung für schräg gestellte Solarelemente (2), mit mindestens zwei vorgefertigten, in Funktionsstellung miteinander verbundenen, abständig zueinander angeordneten dreieckigen Stützelementen (1), die ein direktes oder indirektes Auflager für die schräg gestellten Solarelemente (2) bilden, **dadurch gekennzeichnet, dass** einen Rahmen bildende Rahmenteile (1.1, 1.2, 1.3) jedes Stützelementes (1) aus miteinander verbundenen Rohren oder Blechformteilen bestehen und die dem abgefallenen Endbereich der Auflageseite für die Solarelemente (2) gegenüberliegende Rückseite der Halteeinrichtung durch eine Platte (7) verschlossen ist und/oder die Stützelemente (1) auf Rinnen (8) aufliegen, in denen Beschwerungsmittel (9) in Form von Betonplatten oder dergleichen ablegbar sind.

2. Bausatz nach Anspruch 1, **dadurch gekennzeichnet, dass** jedes Stützelement (1) aus einem ein offenes Dreieck bildenden Rahmen besteht.

3. Bausatz nach Anspruch 1 oder 2, **dadurch gekennzeichnet, dass** die Stützelemente (1) in montierter Stellung durch Streben (3) miteinander verbunden sind.

4. Bausatz nach einem der vorhergehenden Ansprüche, **dadurch gekennzeichnet, dass** die Solarelemente (2) direkt oder indirekt auf den Streben (3) aufliegen.

5. Bausatz nach einem der vorhergehenden Ansprüche, **dadurch gekennzeichnet, dass** zur mittelbaren Lagerung der Solarelemente (2) am Stützelement (1) und/oder den Streben (3) Distanzstücke (4) befestigt sind.

6. Bausatz nach einem der vorhergehenden Ansprüche, **dadurch gekennzeichnet, dass** die Streben (3) mit den Stützelementen (1) verschraubt sind.

7. Bausatz nach einem der vorhergehenden Ansprüche, **dadurch gekennzeichnet, dass** die Stützelemente (1) feststehende Gewindebolzen aufweisen, auf die die Streben zur anschließenden Verschraubung aufsteckbar sind.

8. Bausatz nach einem der vorhergehenden Ansprüche, **dadurch gekennzeichnet, dass** an den Stützelementen (1) oder einer Strebe (3) ein Anschlag (5) angeordnet ist, an dem der in Schrägrichtung abfallende Rand des Solarelementes (2) anliegt.

9. Bausatz nach einem der vorhergehenden Ansprüche, **dadurch gekennzeichnet, dass** der Anschlag (5) an die zugeordnete Strebe (3) angeformt ist.

10. Bausatz nach einem der vorhergehenden Ansprüche, **dadurch gekennzeichnet, dass** der Anschlag (5) und/oder das Distanzstück (4) einen Abstandshalter aufweist.

11. Bausatz nach einem der vorhergehenden Ansprüche, **dadurch gekennzeichnet, dass** die mindestens zwei Stützelemente (1) durch mindestens ein Solarelement (2) miteinander verbunden sind.

12. Bausatz nach einem der vorhergehenden Ansprüche, **dadurch gekennzeichnet**, das jedes Stützelement (1) zwei gegenläufig schräg gestellte Auflager für die Solarelemente (2) aufweist.

13. Bausatz nach einem der vorhergehenden Ansprüche, **dadurch gekennzeichnet, dass** die Streben (3) und/oder die Stützelemente (1) zur Befestigung der Solarelemente (2) in vorgegebenen Abmaß unverlierbar angebrachte Verbindungselemente aufweisen, an denen mit den Solarelementen (2) korrespondierende Halterungen (6) befestigbar sind.
